# EUROPÄISCHE PATENTANMELDUNG

(11) **EP 1 024 425 A2**
(43) Veröffentlichungstag der Anmeldung: **02.08.2000**
(21) Anmeldenummer: 00100316.9
(22) Anmeldetag: 07.01.2000
(51) Int. Cl.: G06F 3/14

(54) **Verfahren zum Betrieb einer Shutterbrille**

(30) Priorität: 29.01.1999 DE 19903412
(71) Anmelder: Elsa AG, 52070 Aachen (DE)
(72) Erfinder: Lessing, Christian, 52080 Aachen (DE)
(74) Vertreter: Kohlmann, Kai, Dipl.-Ing.

(57) **Zusammenfassung**

Ausgehend von einem Personalcomputer mit einer DDC2- fähigen Grafikkarte mit I2C-Bus, jedoch ohne Stereoausgang, liegt der Erfindung die Aufgabe zu Grunde, den Hardwareaufwand zum Anschluß einer Shutterbrille an einem Personalcomputer zu reduzieren und insbesondere eine einfache Möglichkeit zu schaffen, um die Stromversorgung der Shutterbrille zu gewährleisten. Die Lösung beruht auf dem Gedanken, zusätzliche Informationen über eine der beiden Signalleitungen der Grafikkarte zu übertragen, ohne daß an die Grafikkarte angeschlossene I2C-Peripheriegeräte unbeabsichtigt reagieren. Mit einem aus dem I2C-Bus ausgekoppelten Steuersignal wird mit minimalem technischen Aufwand die Shutterbrille gesteuert.

## Beschreibung

Die Erfindung betrifft ein Verfahren zur Ansteuerung einer Shutterbrille am Ausgang einer Grafikkarte.

Die Grafikkarte weist DDC-Funktionen auf und wickelt die Datenübertragung für die DDC-Funktionen über einen I2C-Bus mit zwei Signalleitungen zu den für DDC vorgesehenen Peripheriegeräten nach dem I2C-Protokoll ab.

I2C-Bus ist die Abkürzung für Inter Integrated Circuit Bus. Der I2C-Bus wurde in den frühen 80 er Jahren von Philips entwickelt und unter anderem in der EP 0 051 332 A1 beschrieben Sein Zweck bestand darin, einen einfachen Weg zu schaffen, um eine CPU mit peripheren Chips in einem Fernsehgerät zu verbinden. Der Bus besteht physikalisch aus zwei aktiven Leitungen und einem Masseanschluß. Die aktiven Leitungen, SDA und SCL, sind beide bidirektional. SDA ist eine serielle Datenleitung und SCL ist eine serielle Taktleitung. Jede an den Bus angeschlossene Komponente hat ihre eigene eindeutige Adresse, gleichgültig ob es sich um eine CPU, einen LCD Treiber, einen Speicher, oder einen komplexen Funktions-Chip handelt. Jeder dieser Chips kann als Empfänger und/oder Sender arbeiten, abhängig von seiner Funktionalität. Außerdem können mehrere Bus-Master vorhanden sein. Der Bus-Master ist der Chip, der die Kommandos an den I2C-Bus ausgibt. Im I2C Protokoll heißt es, daß die integrierte Schaltung, die eine Datenübertragung auf dem I2C Bus initiiert als Bus-Master angesehen wird. Während dessen werden alle anderen integrierten Schaltungen als Bus-Slaves angesehen. Wie bereits erwähnt ist der I2C-Bus eine Multi-Master-Bus. Dies bedeutet, daß mehr als ein integrierter Schaltkreis, der in der Lage ist eine Datenübertragung zu initiieren, mit dem I2C-Bus verbunden sein kann. Die Daten- sowie die Taktleitung des I2C-Bus können jeweils den logischen Zustand " Low" (" L") und " High" (" H" ) annehmen. Dazu kommen Wechsel der logischen Zustände von " Low" nach " High" (" L->H" ) und " High" nach " Low" (" H->L" ). Die Daten werden über die Datenleitung synchron zu den Flankenwechseln auf der Taktleitung mittels im I2C-Protokoll festgelegter Kombinationen von Flankenwechseln auf den Signalleitungen übertragen.

DDC ist die englische Abkürzung für **D**isplay **D**ata **C**hannel (Anzeige-Daten-Kanal) und wird oft auch als **Digital Control** bezeichnet. Es handelt sich um einen 1995 von der VESA (**V**ideo **E**lectronics **S**tandards **A**ssociation) eingeführten, digitalen Steuerkanal für moderne Monitore, über den diese dem Betriebssystem bzw. der Grafikkarte ihre technischen Daten mitteilen können. Durch DDC können sich Monitor, Grafikkarte und Betriebssystem verständigen, was v. a. dazu dienen soll, die maximale Bildwiederholfrequenz automatisch einstellen zu können. Die entsprechende Funktion muß aber vom Betriebssystem und den Grafikkarten-Treibern unterstützt werden, was derzeit nur unter Windows 95/98 möglich ist. Zur Übertragung des DDC-Signals wird außerdem eine spezielle serielle Datenleitung im Monitorkabel benötigt. Bei Verwendung der üblichen 15poligen IBM-Monitor-Kabel werden zwei der vorhandenen Pins dafür genutzt (zumeist Nr. 12 und 15). Mit einem **BNC-Kabel** läßt sich DDC nicht nutzen, weil nur fünf Leitungen für die Bildsignale zur Verfügung stehen. Von DDC gibt es mittlerweile **drei Entwicklungsstufen**. Die aktuellste ist DDC2AB.

**DDC 1**: Unidirektional, nur der Monitor sendet kontinuierlich Daten an die Grafikkarte, z. B. über seine Bezeichnung und Herstellerkennung, die Bildschirmgröße und die unterstützten Timing-Werte. Eine DDC 1-kompatible Grafikkarte kann diese Daten auswerten und die entsprechenden Werte für die Konfiguration des Treibers übernehmen. Zu DDC 1 wird auf die EP 0 769 748 A1 hingewiesen.

**DDC 2B:** Der Datenaustausch ist bidirektional und erfolgt unter Verwendung eines I2C kompatiblen Protokolls. Die Grafikkarte übernimmt die Funktion eines Bus-Masters. Der Monitor reagiert als Bus-Slave. Neben den Informationen, die bei DDC 1-Informationen enthalten sind, werden noch weitere Daten des sogenannten Vesa-Display Identification File übertragen, die der Grafikkarte noch mehr Auskunft über den Monitor und seine Spezifikationen geben.

**DDC 2AB:** Ähnlich der weniger erfolgreichen und heute nicht mehr aktuellen Konkurrenz, dem Access-Bus, können von der Grafikkarte nun zusätzlich zu den DDC 2B-Informationen noch Steuerbefehle zur Einstellung des Monitors übertragen werden (Bildlage, Helligkeit, Kontrast etc.). Auch hier wird wie bei DDC 2B ein I2C kompatibles Protokoll verwendet.

DDC nach dem Standard DDC 2B/DDC2AB verwendet technisch einem I2C-Bus, der im Zusammenhang mit der Erfindung explizit den Bus zwischen einer Grafikkarte und einem daran angeschlossenen Peripheriegerät bezeichnet, über den DDC-Signale übertragen werden DDC2B/DDC2AB Datenübertragungen werden nach dem I2C-Protokoll abgewickelt.

Steht zur Datenübertragung zwischen Komponenten nur eine Signalleitung zu Verfügung, kann zur Übertragung ein moduliertes Signal verwendet werden. In diesem modulierten Signal ist in der Regel nicht nur das Daten- sondern auch ein Taktsignal codiert. Der Schaltungsaufwand der Signalrückgewinnung ist allerdings relativ hoch. Es ist jedoch auch möglich, daß man auf einer Signalleitung keine modulierten Daten überträgt, sondern diese Leitung zur direkten Steuerung einer bestimmten Funktion eines angeschlossenen Gerätes verwendet. Die Auswertung dieses Signals ist mit geringem technischen Aufwand möglich, da die in dem Signal enthaltene Information nicht in einer Modulation oder einem Übertragungsprotokoll verschlüsselt ist.

Stereoskopische Bilddarstellungen von Einzelbildern und Bildsequenzen mit Bewegung erhalten eine immer größere Bedeutung, insbesondere auch bei multimedialen Anwendungen. Als Beispiele sind hier 3D-Architekturaufnahmen, dreidimensionale medizinische Bilddarstellung, Maschinenbau und Robotik, Information retrieval, Lehrfilme und Videokonferenzen anzuführen. Für eine stereoskopische Darstellung von Einzelbildern existieren derzeit Verfahren mit einem Display, welches alternierend die versetzten aus den beiden Augenperspektiven aufgenommenen Bilder wiedergibt. Die Verfahren beruhen auf der Interlaced Technik, bei der immer ein Bild abwechselnd dem linken oder dem rechten Auge gezeigt wird. Dabei erfolgt die Wiedergabe zweckmäßig z.B. mit 100 Hz Bildwechselfrequenz, um einen flimmerfreien Eindruck zu gewährleisten. Die Sequenz der Teilbilder kann dann mit synchron zum Bildschirm gesteuerten Shutter-Brillen betrachtet werden. Durch die Shutter-Technologie wird - nicht wahrnehmbar für den Träger mit hoher Frequenz jeweils abwechselnd ein Auge abgedeckt, wodurch der räumliche Seheindruck entsteht.

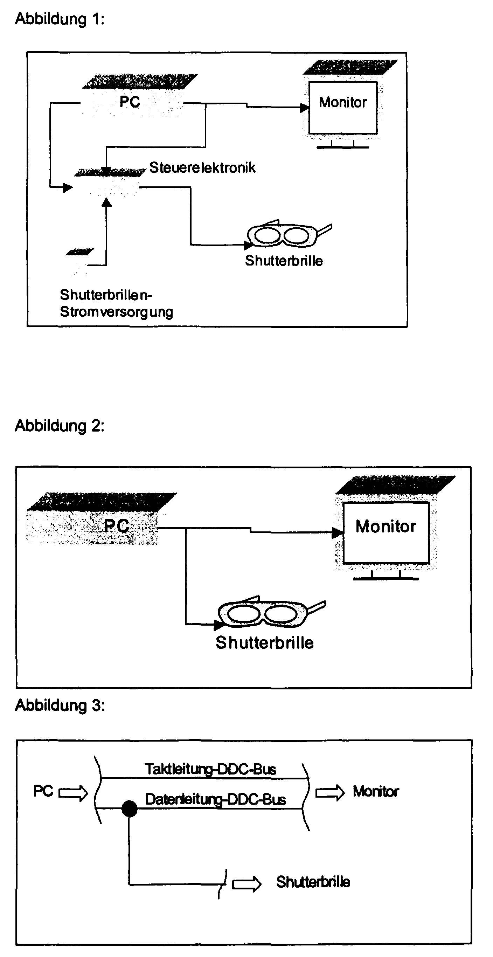

Die herkömmlichen Systeme steuern die Shutterbrille über eine separate Steuerelektronik an, die an eine externe Schnittstelle, wie z.B. einen Druckerport oder eine serielle Schnittstelle des Personalcomputers angeschlossen ist. Außerdem benötigen die herkömmlichen Systeme eine zusätzliche externe Stromversorgung für die Shutterbrille. Abbildung 1 zeigt eine schematische Darstellung einer herkömmlichen Anordnung zur Ansteuerung einer Shutterbrille. Beispiele herkömmlicher Systeme mit separater Steuerelektronik sind der US 5,510,832, der US 5, 808, 588 sowie der WO 97/43681 A1 zu entnehmen.

Schließlich sind Grafikkarten mit Stereoausgang bekannt, an die eine Shutterbrille direkt angeschlossen werden kann Der im VESA-Standard definierte Stereoausgang verfügt über eine Stromversorgung und eine Steuerleitung, wobei über die Steuerleitung die Shutterbrille angesteuert wird.

Ausgehend von einem Personalcomputer mit einer DDC2- fähigen Grafikkarte mit I2C-Bus für die DDC-Funktionen, jedoch ohne Stereoausgang, liegt der Erfindung die Aufgabe zu Grunde, den Hardwareaufwand zum Anschluß einer Shutterbrille an den Personalcomputer zu reduzieren und insbesondere eine einfache Möglichkeit zu schaffen, um die Stromversorgung der Shutterbrille zu gewährleisten.

Die Lösung beruht auf dem Gedanken, zusätzliche Informationen über eine der beiden Signalleitungen der Grafikkarte mit I2C-Bus zu übertragen, ohne daß an die Grafikkarte angeschlossene I2C-Peripheriegeräte unbeabsichtigt reagieren. Mit einem aus dem I2C-Bus ausgekoppelten Steuersignal wird mit minimalem technischen Aufwand die Shutterbrille direkt angesteuert. Im einzelnen wird die Aufgabe durch ein Verfahren zur Ansteuerung einer Shutterbrille am Ausgang einer Grafikkarte gelöst, bei dem eine DDC 2 B/ DDC 2AB fähige Grafikkarte die Datenübertragung über einen I2C-Bus mit zwei Signalleitungen zu den für DDC vorgesehenen Peripheriegeräten nach dem I2C-Protokoll abwickelt, die Shutterbrille zusätzlich an einer der beiden Signalleitungen des I2C-Bus angeschlossen wird, über eine der mit der Shutterbrille verbundenen Signalleitungen zusätzlich Signale für die Ansteuerung der Shutterbrille übertragen werden und, die Stromversorgung der Shutterbrille über den Anschluß des VGA-Anschluß der Grafikkarte erfolgt, an dem die Betriebsspannung für die DDC-Funktionen bereitgestellt wird.

An dem Anschluß der Grafikkarte (z.B. VGA-Anschluß) liegt eine Betriebsspannung für die DDC-Funktionen eines an die Grafikkarte angeschlossenen Monitors an. Der Energiebedarf von Shutterbrillen liegt weit unter der Leistungsgrenze, die von der DDC-Spannungsversorgung des VGA-Anschluß zur Verfügung gestellt wird. Damit ist die Stromversorgung der Brille über den VGA-Anschluß der Grafikkarte möglich und gewährleistet.

Die Erfindung macht sich weiter die Erkenntnis zu Nutze, daß es bei dem für DDC-Funktionen verwendeten I2C-Protokoll, Signalzustände oder Signalwechsel auf der Taktleitung des I2C-Bus gibt, die keine Informationen im Sinne des I2C-Protokolls darstellen. An einem Beispiel wird die Nutzung dieser Erkenntnis verdeutlicht:

Die Daten- sowie die Taktleitung des I2C-Bus können jeweils den logischen Zustand " Low" (" L" ) und " High" (" H" ) annehmen. Dazu kommen Wechsel der logischen Zustände von " Low" nach " High" (" L->H" ) und " High" nach " Low" (" H->L" ). Die Grundinformationen der I2C-Übertragung, die in Kombinationen dieser Zustände enthalten und gültig sind, wenn eine der beiden Signalleitungen ihren logischen Zustand wechselt, zeigt die folgende Tabelle:

| | Signalleitungen | | Enthaltene Information |
|---|---|---|---|
| | Taktleitung | Datenleitung | |
| 1 | H | L->H | Stoppbedingung |
| 2 | H | H->L | Startbedingung |
| 3 | L | L->H | - keine Information - |
| 4 | L | H->L | - keine Information - |
| 5 | L->H | H | Information "High" senden |
| 6 | H->L | H | - keine Information - |
| 7 | L->H | L | Information "Low" senden |
| 8 | H->L | L | - keine Information - |

Im Ruhezustand, d.h. nach einer abgeschlossenen Übertragung, liegen beide Signalleitungen auf "High". Dies ist der Zustand der nach einer Stoppbedingung erfüllt ist (Tabelle: Zeile 1). Eine Datenübertragung würde mit einer Startbedingung eingeleitet werden (Datenleitung: "H->L"). Wechselt man nun statt dessen den Zustand auf der Taktleitung auf "Low" (Tabelle: Zeile 6) ist in diesem Wechsel laut I2C-Protokoll keine Information enthalten. Läßt man die Taktleitung auf "Low" hat man die Möglichkeit den logischen Zustand der Datenleitung beliebig zu wechseln ohne laut I2C-Protokoll eine Information zu übertragen (Tabelle: Wechsel zwischen Zeile 3 und 4). Somit ist gewährleistet, daß angeschlossene Peripheriegeräte für Datenübertragungen nach dem I2C-Protokoll nicht auf Signalwechsel auf der Datenleitung reagieren, da so lange die Taktleitung auf "Low" liegt, keine Startbedingung erfüllt werden kann, die eine I2C-Protokoll konforme Datenübertragung einleiten würde. Über die Datenleitung in dem gerade beschriebenen Beispiel können nun Daten in beliebiger Form übertragen werden. Im einfachsten Fall kann eine direkte Steuerung der Shutterbrille durch den statischen Zustand (Signalpegel) der Datenleitung erfolgen. Durch einen zusätzlichen Anschluß, den man in eine der Signalleitungen des I2C-Bus einbringt, kann das Signal weiter verwendet werden. Dabei wird nur eine Signalleitung des DDC-Bus benötigt. Abbildung 3 zeigt die Verbindung einer Shutterbrille mit der Datenleitung des I2C-Bus.

Ein entscheidender Vorteil des erfindungsgemäßen Verfahrens besteht darin, daß die an dem I2C-Bus angeschlossene Shutterbrille das I2C-Protokoll weder vollständig auswerten noch beachten muß. Es können daher Daten über den I2C-Bus an die Shutterbrille übertragen werden, die mit einem minimalen Schaltungsaufwand ausgewertet werden können, ohne daß die an dem I2C-Bus angeschlossenen, nach dem I2C-Protokoll arbeitenden Peripherie-Geräte auf Signalwechsel auf der Datenleitung reagieren.

## Patentansprüche

1. Verfahren zur Ansteuerung einer Shutterbrille am Ausgang einer Grafikkarte, **dadurch gekennzeichnet**,
- daß eine DDC 2 B/ DDC 2AB fähige Grafikkarte die Datenübertragung über einen I2C-Bus für die DDC-Funktionen mit zwei Signalleitungen zu den für DDC 2 B/DDC 2AB vorgesehenen Peripheriegeräten nach dem I2C-Protokoll abwickelt,
- daß die Shutterbrille zusätzlich an einer der beiden Signalleitungen des I2C-Bus angeschlossen wird,
- daß über die mit der Shutterbrille verbundene Signalleitung zusätzliche Signale für die Ansteuerung der Shutterbrille übertragen werden und
- daß die Stromversorgung der Shutterbrille über die für die DDC-Funktionen bereitgestellte Betriebsspannung erfolgt.

2. Verfahren nach Anspruch 1, **dadurch gekennzeichnet**, daß die zusätzlichen Signale für die Ansteuerung der Shutterbrille über die mit der Shutterbrille verbundene Datenleitung des I2C Bus übertragen werden, wenn Signale oder Signalwechsel auf der Taktleitung des I2C-Bus vorliegen, die keine Informationen im Sinne des I2C-Protokolls darstellen.

3. Verfahren nach Anspruch 2, **dadurch gekennzeichnet**, daß die zusätzlichen Signale für die Ansteuerung der Shutterbrille übertragen werden, wenn der Signalpegel der Taktleitung "Low" ist oder von "High" auf "Low" gewechselt wird.

4. Verfahren nach einem der Ansprüche 1 bis 3, **dadurch gekennzeichnet**, daß die Signale für die Ansteuerung der Shutterbrille an beliebiger Stelle von der mit ihr verbundenen Signalleitung des I2C-Bus für die DDC-Funktionen abgegriffen werden können.

5. Verfahren nach einem der Ansprüche 1 bis 4, **dadurch gekennzeichnet**, daß die Stromversorgung der Shutterbrille über einen separaten Adapter in der VGA-Zuleitung eines an die Grafikkarte angeschlossenen Monitors erfolgt.
